(19) **Europäisches Patentamt / European Patent Office / Office européen des brevets**

(11) **EP 2 069 178 B1**

(12) **EUROPÄISCHE PATENTSCHRIFT**

(45) Veröffentlichungstag und Bekanntmachung des Hinweises auf die Patenterteilung:
**10.08.2011  Patentblatt 2011/32**

(51) Int Cl.:
**B60W 40/12** *(2006.01)*     **B60W 40/10** *(2006.01)*

(21) Anmeldenummer: **07729585.5**

(22) Anmeldetag: **29.05.2007**

(86) Internationale Anmeldenummer:
**PCT/EP2007/055162**

(87) Internationale Veröffentlichungsnummer:
**WO 2008/037509 (03.04.2008 Gazette 2008/14)**

(54) **VERFAHREN ZUM BETREIBEN EINES FAHRZEUGS**

METHOD FOR OPERATING A VEHICLE

PROCEDE PERMETTANT DE FAIRE FONCTIONNER UN VEHICULE

(84) Benannte Vertragsstaaten:
**DE FR**

(30) Priorität: **26.09.2006   DE 102006045305**

(43) Veröffentlichungstag der Anmeldung:
**17.06.2009   Patentblatt 2009/25**

(73) Patentinhaber: **Continental Automotive GmbH
30165 Hannover (DE)**

(72) Erfinder:
• **JUNG, Andreas
  2332 ET Leiden (NL)**
• **MARSTALLER, Rainer
  93057 Regensburg (DE)**
• **MAYER, Andreas
  93049 Regensburg (DE)**

(56) Entgegenhaltungen:
| | |
|---|---|
| EP-A1- 0 563 845 | EP-A1- 0 645 265 |
| EP-A2- 0 326 180 | US-A- 6 055 471 |
| US-A1- 2003 236 603 | US-B1- 6 173 226 |

**Beschreibung**

Die Erfindung betrifft ein Verfahren zum Betreiben eines Fahrzeugs, insbesondere zum Bestimmen der Masse eines Fahrzeugs. Die Kenntnis der Masse kann dazu genutzt werden, um Beladungszustände zu erkennen, und Bremssysteme oder Reifendruckkontrollen beladungsabhängig zu parametrisieren.

Das Dokument US 6 055 471 ist als nächstliegender Stand der Technik zu sehen und zeigt eine Vorrichtung zum Abschätzen der gefederten Masse eines gefederten Bauteils eines Fahrzeugs, dass ein Federungssystem, umfassend einen pneumatischen Federmechanismus und einen Dämpfkrafterzeugungsmechanismus, die zwischen dem gefederten Bauteil und einem ungefederten Bauteil angeordnet sind, besitzt, welche nachfolgende Einrichtungen aufweist:

- eine Einrichtung zum Erfassen der Beschleunigung des gefederten Bauteils in Vertikalrichtung;
- eine Einrichtung zum Erfassen der Grösse der Relativverschiebung des gefederten Bauteils gegenüber dem ungefederten Bauteil in Vertikalrichtung;
- eine Einrichtung zum Erfassen der durch den Dämpfkrafterzeugungsmechanismus erzeugten Dämpfkraft; und
- eine Einrichtung zum Bestimmen der Masse des gefederten Bauteils auf der Basis einer Vielzahl von Beschleunigungen, einer Vielzahl von Relativverschiebungsgrössen und einer Vielzahl von Dämpfkräften, die über einen Zeitraum von einer bestimmten Länge hinweg durch die Beschleunigungserfassungseinrichtung, die

Relativverschiebungserfassungseinrichtung bzw. die Dämpfkrafterfassungseinrichtung erfasst werden.

Es ist Aufgabe der Erfindung, ein Verfahren und eine Vorrichtung zum Betreiben eines Fahrzeugs anzugeben, bei dem die Masse des Fahrzeugs schnell und genau bestimmt werden kann.

Die Aufgabe wird durch ein Verfahren und eine Vorrichtung zum Betreiben eines Fahrzeugs mit den Merkmalen der jeweiligen unabhängigen Patentansprüche gelöst. Vorteilhafte Ausgestaltungen der Erfindung sind in den Unteransprüchen gekennzeichnet. Das Fahrzeug weist Radaufhängungen und diesen jeweils zugeordneten Kennlinien auf, wobei die Kennlinien jeweils einen Zusammenhang zwischen der an der jeweiligen Radaufhängung anteilig angreifenden Gewichtskraft des Fahrzeugs und dem jeweiligen Höhenstand des Fahrzeugs an der Radaufhängungsstelle herstellen. Das Fahrzeug weist außerdem mindestens zwei Höhenstandssenscren zum Erfassen der Höhenstände an den Radaufhängungen auf, wobei den Höhenstandssensoren jeweils ein Referenzhöhenstand zugeordnet ist, der repräsentativ für einen vorgegebenen Beladungszustand des Fahrzeugs ist. Die Erfindung zeichnet sich durch ein Verfahren und eine entsprechende Vorrichtung aus, bei dem, beziehungsweise der, die Höhenstände erfasst werden und die am Fahrzeug angreifenden Kräfte und die Beschleunigung des Fahrzeugs aufgrund der am Fahrzeug angreifenden Kräfte ermittelt werden. Aus den am Fahrzeug an-greifenden Kräften und der Beschleunigung des Fahrzeugs wird ein Schätzwert für die Masse des Fahrzeugs ermittelt. Aus mindestens dem Schätzwert für die Masse des Fahrzeugs, den Kennlinien der Radaufhängungen und den erfassten Höhenständen werden Werte ermittelt, die die Referenzhöhenstände repräsentieren.

Es werden so zwei oder mehrere Höhenstandssensoren zur Massebestimmung eingesetzt. Derartige Höhenstandssensoren oder Federwegsensoren finden sich beispielsweise in Fahrzeugen mit Niveauregelung oder aktiver Federung. Zusammen mit den Kennlinien der Radaufhängung, die beispielsweise durch Federkonstanten beschrieben werden, kann aus den Höhenständen die an den-Radaufhängungen anteilig angreifende Gewichtskraft bestimmt werden und daraus auf die Masse des Fahrzeugs geschlossen werden. Höhenstandssensoren ermöglichen es mit hoher Präzision relative Masseänderungen innerhalb von sehr kurzen Zeiten sowohl im Stand des Fahrzeugs als auch während der Fahrt zu erfassten. Eine Herausforderung dabei ist, dass die Höhenständssensoren regelmäßig kalibriert werden sollten, insbesondere Referenzhöhenstände festgelegt werden sollten, um fehlerhafte Ergebnisse beim langfristigen Gebrauch aufgrund von Änderungen in den Radaufhängungen oder des Fahrzeugaufbaus zu vermeiden.

Zur diesem Zweck wird ein Schätzwert der Masse des Fahrzeugs aus den am Fahrzeug angreifenden Kräften und der Beschleunigung des Fahrzeugs ermittelt. Der Schätzwert der Masse des Fahrzeugs ist bevorzugt durch den Quotienten aus den am Fahrzeug angreifenden Kräften und der durch diese Kräfte hervorgerufenen Beschleunigung des Fahrzeugs gegeben. Dieser Schätzwert wird zusammen mit den Kennlinien der Radaufhängungen eingesetzt, um Werte, die die Refererizhöhenstände der Höhenstandssensoren repräsentieren, zu bestimmen und so bevorzugt die Höhenstandssensoren zu kalibrieren. Auf diese Weise kann die hohe Genauigkeit und die kurze Messzeit der Höhenstandssensoren genutzt werden und dabei auch ein Kalibriervorgang durchgeführt werden.

In einer Weiterbildung werden weitere Höhenstände erfasst und die Masse des Fahrzeugs abhängig von mindestens den Werten, die die Referenzhöhenstände repräsentieren, den Kennlinien der Radaufhängungen und den weiteren Höhenständen ermittelt.

So kann auch eine Ermittlung der Masse des Fahrzeugs durchgeführt werden.

In einer weiteren Weiterbildung werden- die Werte, die die Referenzhöhenstände repräsentieren, gemittelt.

Durch die Mittelung der Werte, die die Referenzhöhenstände repräsentieren, werden Ausreißer der Schätzwerte für die Masse ausgeglichen. Ausreißer für die Schätzwerte für die Masse können beispielsweise durch ungeeignete Fahrsituationen beim Ermitteln der am Fahrzeug angreifenden Kräfte oder der Beschleunigung des Fahrzeugs auftreten.

In einer weiteren Weiterbildung werden zum Ermitteln der am Fahrzeug angreifenden Kräfte mindestens die Antriebskraft, die Bremskraft, der Luftwiderstand oder der Rollwiderstand des Fahrzeugs berücksichtigt.

Luftwiderstand und Rollwiderstand gehören zu den wesentlichsten Kräften, die am Fahrzeug angreifen. Durch Berücksichtigen nur der wichtigsten Kräfte lässt sich der Aufwand zum Bestimmen der Kräfte reduzieren. Bevorzugt können auch andere Kräfte, die beispielsweise durch das Massenträgheitsmoment der Reifen hervorgerufen werden, berücksichtigt werden. Die am Fahrzeug angreifenden Kräfte können direkt gemessen oder durch Messungen, die in ein Modell einfließen, berechnet werden.

In einer weiteren Weiterbildung wird als Beschleunigung des Fahrzeugs eine Längsbeschleunigung mittels eines Längsbeschleunigungssensors erfasst.

Längsbeschleunigungssensoren sind als Standardsensoren verfügbar und ermöglichen eine einfache und genaue Messung der Beschleunigung des Fahrzeugs in Längsrichtung.

In einer weiteren Weiterbildung.wird über mindestens einen Raddrehgeschwindigkeitssensor eine Raddrehgeschwindigkeit erfasst und die Beschleunigung des Fahrzeugs aus der zeitlichen Ableitung der erfassten Raddrehgeschwindigkeit ermittelt.

Raddrehgeschwindigkeitssensoren sind in vielen Fahrzeugen bereits beispielsweise als Teil eines Anti-Blokkiersystems vorhanden und können ohne großen zusätzlichen Aufwand genutzt werden, um die Beschleunigung des Fahrzeugs zu ermitteln.

In einer weiteren Weiterbildung wird der Schätzwert für die Masse in vorgegebenen Fahrsituationen ermittelt.

Bei geeigneter Auswahl der Fahrsituationen lassen sich Fehler bei der Berechnung des Schätzwerts für die Masse des Fahrzeugs minimieren und Korrekturterme und Mittlungsverfahren mit hohem rechnerischen Aufwand vermeiden. Eine günstige Fahrsituation ist beispielsweise die Fahrt auf einer geraden Strecke ohne Steigung und mit konstanter Beschleunigung in einem niedrigen Geschwindigkeitsbereich.

In einer weiteren Weiterbildung wird ein gemittelter Schätzwert der Masse abhängig von den Schätzwerten der Masse ermittelt.

Da abhängig von den Fahrsituationen Schwankungen im Schätzwert der Masse auftreten können, ist es von Vorteil wenn die Schätzwerte der Masse gemittelt werden.

In einer weiteren Weiterbildung werden die Ermittlung des Schätzwerts für die Masse des Fahrzeugs aus den am Fahrzeug angreifenden Kräften und der Beschleunigung des Fahrzeugs, die Ermittlung der Werte, die die Referenzhöhenstände repräsentieren und die Ermittlung der Masse des Fahrzeugs aus den Werten, die die Referenzhöhenstände repräsentieren, den gemessenen Höhenständen und den Kennlinien der Radaufhängungen, quasi parallel durchgeführt.

Auf diese Weise kann ein Schätzwert für die Masse des Fahrzeugs unmittelbar zur Berechnung der Referenzhöhenstände benutzt werden und so ohne Verzögerung für die Ermittlung der Masse des Fahrzeugs eingesetzt werden.

In einer weiteren Weiterbildung werden die Werte, die die Referenzhöhenstände repräsentieren, sobald sie ermittelt wurden zum Ermitteln der Masse des Fahrzeugs eingesetzt.

Auf diese Weise stehen neu ermittelte Referenzhöhenstände bei Änderungen der Fahrzeugmasse unmittelbar für die Ermittlung der Masse des Fahrzeugs zur Verfügung, sodass eine Dekalibrierung der Höhenstandsensoren bei Masseänderungen durch beispielsweise Fahrzeugaufbauten vermieden wird.

In einer weiteren Weiterbildung werden die Werte, die die Referenzhöhenstände repräsentieren, erst ermittelt, wenn der Schätzwert für die Masse des Fahrzeugs in einem vorgegebenen Wertebereich liegt.

Auf diese Weise kann sichergestellt werden, dass die Referenzhöhenstände nicht unzulässige Werte annehmen. Der vorgegebene Wertebereich kann beispielsweise durch das Leergewicht und das maximal zulässige Gewicht des Fahrzeugs bestimmt werden.

In einer weiteren Weiterbildung werden die Werte, die die Referenzhöhenstände repräsentieren nur zum Ermitteln der Masse des Fahrzeugs eingesetzt, nachdem sich diese Werte um einen vorgegebenen Wert geändert haben.

Ändern sich die Werte, die die Referenzhöhenstände repräsentieren, nur geringfügig, so ist es nicht notwendig, dass diese kontinuierlich aktualisiert und zum Ermitteln der Masse des Fahrzeugs eingesetzt werden. Auf diese Weise werden unnötige Rechenoperationen vermieden.

In einer weiteren Weiterbildung wird für die Ermittlung der Werte, die die Referenzhöhenstände repräsentieren, mindestens ein Kalman-Filter eingesetzt, in welchem bereits ermittelte Werte zusammen mit den gerade ermittelten Werten zum Ermitteln von neuen Werten für die Referenzhöhenstände gekoppelt werden.

Der Vorteil des Kalman-Filters beruht in diesem Zusammenhang darin, dass er eine iterative Struktur aufweist und somit für Echtzeitanwendungen geeignet ist. Die neuen Werte bilden dabei einen Schätzwert für die Referenzhöhenstände.

In einer weiteren Weiterbildung werden die Kennlinien der Radaufhängungen aus Differenzen von Höhenständen und Differenzen von Massen des Fahrzeugs ermittelt.

Da sich die Kennlinien der Radaufhängungen ändern können oder unbekannt sein können, ist es vorteilhaft diese aus zumindest zwei Höhenständen, die zu zwei verschiedenen Massen des Fahrzeugs gehören, zu ermitteln. Das Ermitteln schließt auch ein Anpassen der Kennlinien ein, wodurch eine Selbstkalibrierung möglich ist.

In einer weiteren Weiterbildung werden Bremssysteme oder Reifendruckinformationssysteme abhängig von der ermittelten Masse des Fahrzeugs eingestellt.

Insbesondere bei Fahrzeugen deren Masse starken Schwankungen unterliegt, wie beispielsweise bei LKWs oder Kleintransporter können die Bremssysteme, wie beispielsweise das Anti-Blockiersystem (ABS), elektronische Stabilitatsprogramme (ESP) und Antriebsschlupfregelungen (ASR), sowie die Reifendruckinformationssysteme an die ermittelte Masse des Fahrzeugs angepasst werden, was zu einer Erhöhung der Sicherheit führt.

Ausführungsbeispiele der Erfindung werden nachfolgend anhand der schematischen Figuren beschrieben. In den Figuren zeigen:

Figur 1    ein Ausführungsbeispiel einer Radaufhängung mit Hö- henstandssensor,

Figur 2    ein beispielhaftes Fahrzeug mit den an dem Fahrzeug angreifenden Kräften und Beschleunigungen,

Figur 3    ein beispielhaftes Flussdiagramm mit Schritten zur Ermittlung der Masse des Fahrzeugs, und

Figur 4    Ausführungsbeispiele, bei denen die ermittelten Re- ferenzhöhenstände zu unterschiedlichen Zeitpunkten verarbeitet werden.

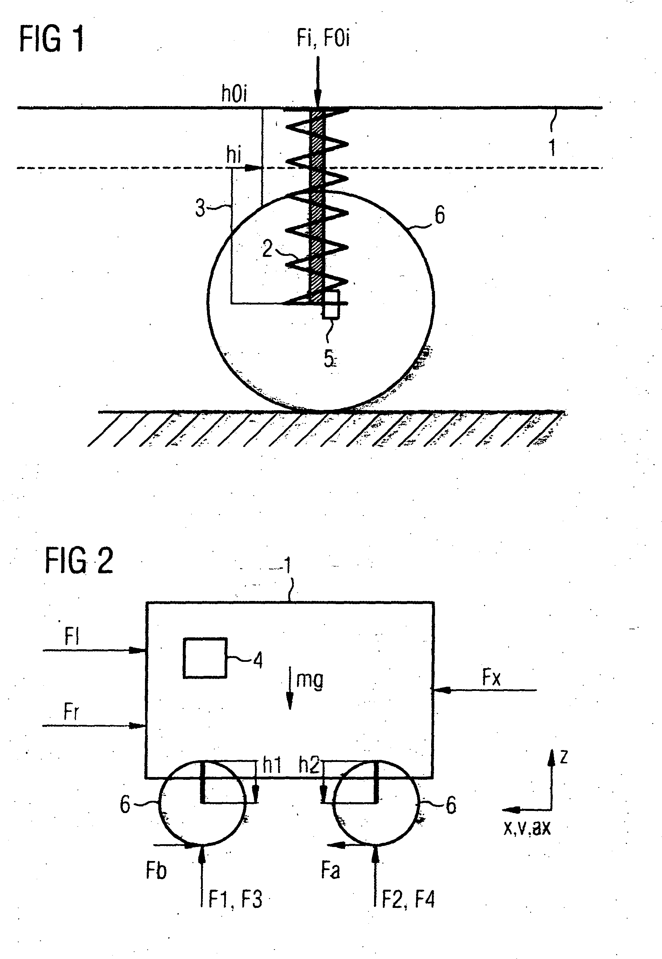

Figur 1 zeigt ein Teil eines Fährzeugs 1, an dem ein Rad 6 des Fahrzeugs mittels einer Radaufhängung 2 befessigt ist. Über einen Höhenstandssensor 3 kann abhängig von der auf die Radaufhängung 2 wirkende Kraft Fi ein Höhenstand hi ermittelt werden. Ein Referenzhöhenstand h0i ist dabei repräsentativ für einen vorgegebenen Beladungszustand des Fahrzeugs, beispielsweise einen unbeladenen Zustand. Ändert sich der Beladungszustand des Fahrzeugs 1, so ändert sich auch der Höhenstand hi, wobei der Zusammenhang zwischen dem Höhenstand hi und der an der Radaufhängung 2 angreifenden Kraft Fi durch die Kennlinie Di der Radaufhängung 2 gegeben ist.

Die Radaufhängung 2 kann beispielsweise als Feder-Dämpfersystem mit einer Spiralfeder, Blattfeder oder einer Gasdruckfeder realisiert sein. Für Feder-Dämpfersysteme und normale Beladungszustände kann die Kennlinie Di der Radaufhängung 2 näherungsweise als linear angenommen werden, so dass das Hookesche Gesetz gilt. Für Gasdruckfedersysteme kann die Kennlinie Di aus dem Arbeitsbereich abhängig vom Kennlinienverlauf des Gasdruckfedersystems bezogen werden. Im Hookschen Fall ist in einem vorgegebenen Beladungszustand des Fahrzeugs, der beispielsweise ein unbeladener Zustand des Fahrzeugs ist, die anteilig an der i-ten Radaufhängung angreifende Gewichtskraft des Fahrzeugs F0i das Produkt aus der Kennlinie Di der i-ten Radaufhängung 2 und dem Referenzhöhenstand.h0i des i-ten Höhenstandssensors 3:

$$(G1) \qquad F0i = Di * h0i.$$

In einem weiteren vorgegebenen Beladungszustand des Fahrzeugs, der beispielsweise durch eine Zuladung gekennzeichnet ist, wirkt die anteilige Kraft Fi auf die i-te Radaufhängung. 2 und es wird der Höhenstand hi eingenommen, wobei gilt:

$$(G2) \qquad Fi = Di * hi.$$

In Figur 1 ist nur eine Radaufhängung 2 und ein Höhenstandsensor 3 gezeigt. Das Fahrzeug 1- weist jedoch im Allgemeinen eine Vielzahl N an Radaufhängungen 2 und Höhenstandsensoren 3 auf. Jeder Radaufhängung 2 kann ein jeweiliger Höhenstandssensor 3 zugeordnet sein. Ein Höhenstandsensor 3 kann aber auch beispielsweise zwei Radaufhängungen 2, die zu einer Achse des Fahrzeugs gehören, zugeordnet sein.

In Figur 2 ist ein Fahrzeug 1 zusammen mit den an diesem angreifenden Kräften gezeigt. Das Kräftegleichgewicht in vertikaler z-Richtung erfordert, dass die Gewichtskraft des Fahrzeugs 1 gleich der Summe der an den einzelnen Radaufhängungen 2 wirkende Kräften Fi ist. Diese ist nach den Gleichungen (G1) und (G2) wiederum gleich der Summe aus den Produkten der jeweiligen Kennlinien Di und der Höhenstände hi. Es gilt:

$$(G3) \quad \Sigma Fi = m * g = \Sigma(Di * hi)$$

im beladenen Zustand und

$$(G4) \quad \Sigma F0i = m0 * g = \Sigma(Di * h0i)$$

im unbeladenen Zustand, wobei g die Erdbeschleunigung ist. Besitzt das Fahrzeug 1 beispielsweise vier Räder 6 und vier Höhenstandssensoren 3, so werden die Summen über i = 1, 2, 3, 4 berechnet. Bei der Betrachtung der radindividuellen Höhenstände hi können durch ein Mittlungsverfahren die statischen Radlasten ermittelt werden. Auf diese Weise ist est möglich, sowohl im Stillstand, als auch während der Fahrt Ladungsverschiebungen zu erkennen und entsprechende Warnmeldungen an andere Steuergeräte, wie das elektronische Stabilitätsprogramm odeer ein Bremssystem auszugeben.

Bei den Höhenstandssensoren 3 werden bevorzugt Höhenstandsdifferenzen ausgelesen. Subtrahiert man Gleichungen (G3) und (G4) für die Summenkräfte des beladenen und des unbeladenen Zustands voneinander, so erhält man:

$$(G5) \quad \Sigma(Di * hi) - \Sigma(Di * h0i) = (m - m0) * g.$$

Durch Umstellen dieser Gleichung kann die Masse m des Fahrzeugs berechnet werden, falls die Kennlinien Di, die Höhenstände hi, die Referenzhöhenstände h0i, die Masse des unbeladenen Fahrzeugs m0 und die Erdbeschleunigung g bekannt sind:

$$(G6) \quad m = m0 + (\Sigma(Di * hi) - \Sigma(Di * h0i)) / g.$$

Umgekehrt lassen sich Werte, die die Referenzhöhenstände h0i repräsentieren aus

$$(G7) \quad \Sigma(Di * h0i) = \Sigma(Di * hi) - (m - m0) * g$$

berechnen.

Problematisch bei der Berechnung der Masse m ist, dass die Referenzhöhenstände h0i. sich ändern können oder unbekannt sein können. Daher wird ein Schätzwert mx für die Masse des Fahrzeugs ermittelt, mit dessen Hilfe aus Gleichung (G7) Werte ermittelt werden können, die die Referenzhöhenstände h0i repräsentieren.

Zum Berechnen des Schätzwerts mx für die Masse des Fahrzeugs werden die am in Figur 2 gezeigten Fahrzeug 1 in x-Richtung horizontal angreifenden Kräfte betrachtet. Das Kräftegleichgewicht erfordert, dass die Summe dieser Kräfte Fx gleich der Massenträgheitskraft ist:

$$(G8) \quad Fx = mx * ax,$$

wobei ax die Beschleunigung des Fahrzeugs in x-Richtung ist. Die in Figur 2 am Fahrzeug in x-Richtung angreifenden Kräfte sind die Antriebskraft Fa und der dieser entgegenwirkende Luftwiderstand Fl

$$(G9) \quad Fl = cw * A * p / 2 * v^2$$

und der Rollwiderstand Fr

$$(G10) \qquad Fr = cr * v,$$

wobei cw der Luftwiderstandsbeiwert, A die projizierte-Stirnfläche des Fahrzeugs, ρ die Luftdichte, v die Geschwindigkeit des Fahrzeugs 1 und cr der Rollwiderstandsbeiwert ist. Aus Gleichung (G8) kann die ein Schätzwert für Masse mx des Fahrzeugs berechnet werden:

$$(G11) \qquad mx = (Fa - Fr - Fl) / ax.$$

Die Antriebskraft Fa kann dabei auch durch eine Bremskraft Fb oder durch eine in Fahrtrichtung wirkende Gewichtskraft ersetzt werden. Selbstverständlich kann das in Figur 2 gezeigte Modell des Fahrzeugs 1 hinsichtlich der angreifenden Kräfte noch erweitert werden, indem beispielsweise Flächenträgheitsmomente der Räder oder des Antriebsstrangs berücksichtigt werden.

Um den Schätzwert mx für die Masse des Fahrzeugs 1 nach Gleichung (G11) bestimmen zu können, ist es notwendig neben den angreifenden Kräften Fx auch die Beschleunigung ax des Fahrzeugs 1 zu ermitteln. Eine Möglichkeit besteht darin, einen Längsbeschleunigungssensor 4, wie in Figur 2 gezeigt, am Fahrzeug 1 zu befestigen, mit dem die Beschleunigung ax ermittelt wird. Die von diesem Längsbeschleunigungssensor 4 gelieferte Beschleunigung muß nicht neigungskorrigiert werden, da die effektive Längsbeschleunigung, die von diesem Beschleunigungssensor ausgegeben wird, unabhängig von der Neigung nach (G11) mit der Fahrzeugmasse korreliert. Eine weitere Möglichkeit ist, einen wie in Figur 1 gezeigten Raddrehgeschwindigkeitssensor 5 zum Erfassen der Raddrehgeschwindigkeit des Rades 6 einzusetzen. Die Längsbeschleunigung ax kann dann aus der zeitlichen Ableitung der Raddrehgeschwindigkeiten und dem Radradius berechnet werden. Mit der Längsbeschleunigung ax und der am Fahrzeug 1 angreifenden Summenkraft Fx kann nun ein Schätzwert mx für die Masse des Fahrzeugs 1 berechnet werden.

Bei der Ermittlung der Beschleunigung ax und der Kraft Fx ist es von Vorteil, wenn diese über lange Mittelwertbildung und bei geeigneten Fahrsituationen- bestimmt werden. Die- Fahrsituationen werden bevorzugt so gewählt, dass die Annahmen über die am Fahrzeug 1 angreifenden Kräfte bestmöglich erfüllt werden. In Gleichungen (G9) und (G10) ist beispielsweise der Luftwiderstandsbeiwert cw und der Rollwiderstandsbeiwert cr tatsächlich nur in einem gewissen Geschwindigkeitsbereich des Fahrzeugs 1 konstant, so dass bei der Ermittlung der Beschleunigung ax und der Kraft Fx bevorzugt Geschwindigkeiten gewählt werden, die in diesem Bereich liegen.

Mit dem Schätzwert mx können nun Werte, die die Referenzhöhenstände h0i repräsentieren anhand von Gleichung (G7) berechnet werden. Die Werte, die die Referenzhöhenstände h0i repräsentieren können dann in Gleichung (G6) eingesetzt werden und bei einer Messung von weiteren Höhenstände hi zur Berechnung der Masse m des Fahrzeugs 1 eingesetzt werden.

Weisen alle Radaufhängungen 2 die gleichen Kennlinien Di = D auf und führt man den Mittelwert h0' der Referenzhöhenstände h0i

$$(G12) \qquad h0' = 1 / N * \Sigma h0i$$

und den Mittelwert h' der Höhenstände hi

$$(G13) \qquad h' = 1 / N * \Sigma hi$$

ein, so vereinfachen sich die Gleichung (G6) zu

$$(G14) \qquad m = m0 + D / g * N * (h' - h0')$$

und Gleichung (G7) zu

$$(G15) \qquad h0' = h' - (m0 - mx) * g / (N * D).$$

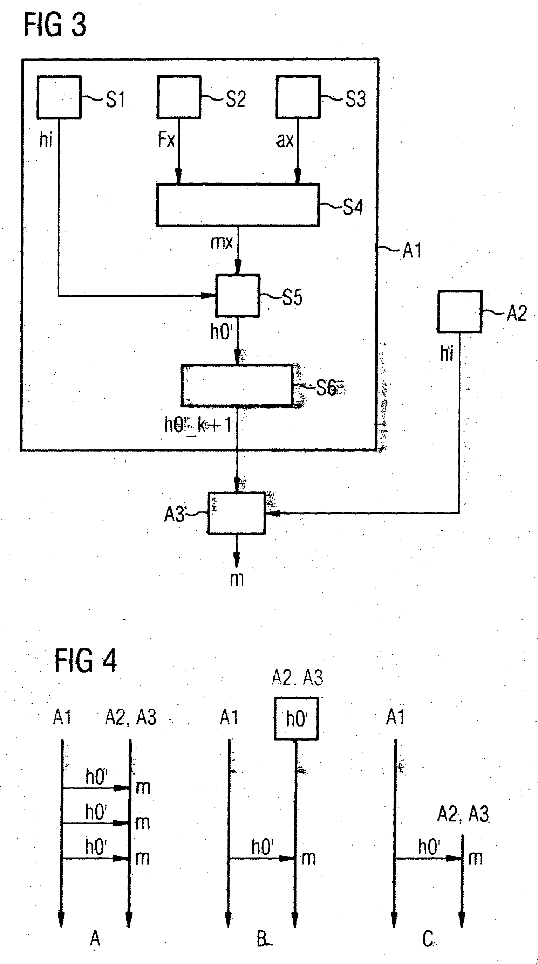

Figur 3 zeigt ein beispielhaftes Flussdiagramm zum Ermitteln der Masse eines Fahrzeugs. In einem ersten Programm A1 werden Werte, die die Referenzhöherrstände h0i repräsentieren, ermittelt. In einem zweiten Programm A2 werden die weiterer Höhenstände hi ermittelt. Die Masse wird in einem dritten-programm A3 aus den Ergebnissen des ersten Programms A1 und des zweiten Programms A2 gemäß Gleichung (G6) oder (G14) ermittelt.

Im ersten Programm A1 werden in Schritt S1 zunächst die Höhenstände hi erfasst. In den Schritten S2 und S3 werden die am Fahrzeug 1 angreifenden Kräfte Fx beziehungsweise die Beschleunigung ax des Fahrzeugs 1 ermittelt. In Schritt S4 wird aus diesen Werten ein Schätzwert für die Masse mx gemäß Gleichung (G8) berechnet. In Schritt S5 werden die in Schritt S1 erfassten weiteren Höhenstände hi zusammen mit dem Schätzwert mx für die Masse aus Schritt S4 anhand der Gleichung (G7) oder (G15) verarbeitet, um Werte, die die Referenzhöhenstände h0i repräsentieren, zu ermitteln. Die Schritte S1, S2 und S3 können dabei zeitlich parallel ausgeführt werden.

In Schritt S6 wird ein Schätzverfahren für die Werte, die die Referenzhöhenstände h0i repräsentieren, eingesetzt. Einfachheitshalber wird das Schätzverfahren anhand der Gleichung (G15) für den Mittelwert der Referenzhöhenstände h0' erläutert. Selbstverständlich kann dieses Schätzverfahren auch für die Werte aus Gleichung (G7) benutzt werden. Ein aktueller Wert h0'_k+1 für den Mittelwert des Referenzhöhenstands wird dabei aus der Summe eines vorherigen Werts h0'_k und dem Produkt einer Kalman-Konstante kh0 mit dem Differenz zwischen einem aktuell ermittelten Wert h0' und dem vorigen Wert h0'_k berechnet:

$$(G16) \qquad h0'\_k+1 = h0'\_k + kh0 * (h0' - h0'\_k).$$

Der Kalman-Gain kh0 gibt dabei an, wie schnell beziehungsweise langsam der Schätzwert sich an veränderte Situationen anpasst. Der Einsatz des Kaiman-Filters ermöglicht eine hochgenaue Schätzung für den Mittelwert der Referenzhöhenstände h0'_k+1 und erlaubt eine Selbstkalibrierung der Höhenstandssensoren 3.

Figur 4 zeigt drei verschiedene Ausführungsbeispiele, bei denen die Werte, die die Referenzhöhenstände h0i repräsentieren, zu unterschiedlichen Zeitpunkten verarbeitet werden. In Teil A werden das erste Programm A1 und das zweite Programm A2 aus Figur 3 parallel abgearbeitet. Dabei findet eine ständige Aktualisierung der Werte, die die Referenzhöhenstände repräsentieren und in der Figur durch h0' gekennzeichnet sind satt, sodass die Masse des Fahrzeugs anhand des dritten Programm A3 innerhalb von kurzen Zeitabständen aktualisiert werden kann. Diese Vorgehensweise ist vorteilhaft, wenn sich die Masse m des Fahrzeugs 1 in zeitlich kurzen Abständen ändert, wie es beispielsweise bei einem Taxi der Fall ist, welches innerhalb relativ kurzer Zeit mit einer oder mit vier Personen beladen sein kann.

Teil B zeigt ein Ausführungsbeispiel, bei dem das dritte Programm A3 zunächst mit gespeicherten Werten h0', die die Referenzhöhenstände repräsentieren, startet. Die Masseberechnung steht damit über die Programme A2 und A3 sehr schnell zur Verfügung. Das erste Programm A1 läuft parallel mit, allerdings findet eine Aktualisierung der Werte h0', die die Referenzhöhenstände repräsentieren nur statt, wenn diese sich langzeitstabil-signifikant vom zuletzt gespeicherten Wert unterscheiden.

Teil C zeigt ein Ausführungsbeispiel, bei dem nach einem Fahrzeugneustart zunächst das erste Programm A1 gestattet wird, um die Werte, die die Referenzhöhenstände-h0', repräsentieren, zu ermitteln. Wenn sich diese Werte als langzeitstabil erweisen, werden das zweite Programm A2 und das dritte Programm A3 gestartet, welche den ermittelten Wert als Startwert für die Masseberechnung benutzen. Nachteilig ist dabei jedoch, dass eine längere Zeit, beispielsweise 15 Minuten, erforderlich ist, bis die Werte, die die Referenzhöhenstände repräsentieren, ermittelt werden und eine präzise Masseermittlung erfolgen kann. Diese Vorgehensweise ist jedoch von Vorteil, wenn sich die Kennlinien Di der Radaufhängungen 2 verändert haben.

In einem weiteren Ausführruncsbeispiel kann auf die Kennlinien Di der Radaufhängungen 2 rückgeschlossen werden. Dazu werden in einem eigenen Algorithmus bei verschiedenen Belastungszuständen des Fahrzeugs 1 die Wertepaare (m1, hi1) und (m2, hi2) gespeichert. Die Federkonstante D einer als linear angenommenen Kennlinie Di wird abhängig vom Quotient der Differenz der Gewichtskräfte und der Differenz der Höhenstände berechnet:

$$(G17) \qquad D = (m2 * g - m1 * g) / (hi2 - hi1)$$

und bevorzugt zur bisher benutzten Federkonstante addiert. Wird eine gleitende Mittelwertbildung über einen Zeitraum von beispielsweise mindestens mehreren hundert Kilometern durchgeführt, so ergibt sich ein sehr zuverlässiger Schätzwert für die Steigung der Kennlinie Di. Durch einen Vergleich der ermittelten Kennlinie Di in regelmäßigen, großen Abständen kann dadurch auf eine Änderung der Kennlinie Di geschlossen werden. Das oben beschriebene Verfahren zur Ermittlung der Masse kann anschließend mit den neu ermittelten, eventuell geänderten Kennlinien Di durchgeführt werden. Durch diese Vorgehensweise kann eine komplette Selbstkalibrierung durchgeführt werden, die auch nach Fahrwerksumbauten oder Änderungen der Fahrzeugsaufbauten zu zuverlässigen Massenberechnungen führt.

**Patentansprüche**

1. Verfahren zum Betreiben eines Fahrzeugs (1), welches aufweist:

   - Radaufhängungen (2), und diesen jeweils zugeordneten Kennlinien (Di), wobei die Kennlinie (Di) jeweils einen Zusammenhang zwischen der an der jeweiligen Radaufhängung (2) anteilig angreifenden Gewichtskraft (Fi) des Fahrzeugs (1) und dem jeweiligen Höhenstand (hi) des Fahrzeugs (1) an der Radaufhängungsstelle (2) herstellt, und
   - mindestens zwei Höhenstandsensoren (3), zum Erfassen der Höhenstände (hi) an den Radaufhängungen (2), wobei den Höhenstandsensoren (3) jeweils ein Referenzhöhenstand (h0i) zugeordnet ist, der repräsentativ für einen vorgegebenen Beladungszustand des Fahrzeugs (1) ist,
   mit den Schritten:
   - Erfassen der Höhenstände (hi),
   - Ermitteln der am Fahrzeug (1) angreifenden Kräfte (Fx), wobei mindestens die Antriebskraft (Fa), die Bremskraft (Fb), der Luftwiderstand (Fl) oder der Rollwiderstand (Fr) des Fahrzeugs (1) berücksichtigt werden,
   - Ermitteln der Beschleunigung (ax) des Fahrzeugs (1) aufgrund der am Fahrzeug (1) angreifenden Kräfte (Fx),
   - Ermitteln eines Schätzwertes (mx) für die Masse (m) des Fahrzeugs (1) aus den am Fahrzeug (1) angreifenden Kräften (Fx) und der Beschleunigung (ax) des Fahrzeugs (1), und
   - Ermitteln von Werten, die die Referenzhöhenstände (h0i) repräsentieren, aus mindestens dem Schätzwert (mx) für die Masse (m) des Fahrzeugs (1), den Kennlinien (Di) der Radaufhängungen und den erfassten Höhenständen (hi).

2. Verfahren nach Anspruch 1
   **dadurch gekennzeichnet, dass**

   - weitere Höhenstände (hi) erfasst werden, und
   - die Masse (m) des Fahrzeugs (1) abhängig von mindestens den Werten, die die Referenzhöhenstände (h0i) repräsentieren, den Kennlinien (Di) der Radaufhängungen (2) und den weiteren Höhenständen (hi) ermittelt wird.

3. Verfahren nach Anspruch 1 oder 2
   **dadurch gekennzeichnet, dass**
   die Werte, die die Referenzhöhenstände (h0i) repräsentieren, gemittelt werden.

4. Verfahren nach einem der vorigen Ansprüche
   **dadurch gekennzeichnet, dass**
   als Beschleunigung (ax) des Fahrzeugs (1) eine Längsbeschleunigung mittels eines Längsbeschleunigungssensors (4) erfasst wird.

5. Verfahren nach einem der Ansprüche 1 bis 3
   **dadurch gekennzeichnet, dass**

   - über mindestens einen Raddrehgeschwindigkeitssensor (5) eine Raddrehgeschwindigkeit erfasst wird, und
   - die Beschleunigung (ax) des Fahrzeugs (1) aus der zeitlichen Ableitung der erfassten Raddrehgeschwindigkeit ermittelt wird.

6. Verfahren nach einem der vorigen Ansprüche
   **dadurch gekennzeichnet, dass**
   der Schätzwert (mx) für die Masse in vorgegebenen Fahrsituationen ermittelt wird.

7. Verfahren nach einem der vorigen Ansprüche

**dadurch gekennzeichnet, dass**
ein gemittelter Schätzwert der Masse abhängig von den Schätzwerten (mx) der Masse ermittelt wird.

8.  Verfahren nach einem der vorigen Ansprüche
    **dadurch gekennzeichnet, dass**

    - die Ermittelung des Schätzwerts (mx) für die Masse des Fahrzeugs (1) aus der am Fahrzeug (1) angreifenden Kräfte (Fx) und der Beschleunigung (ax) des Fahrzeugs (1),
    - die Ermittelung der Werte, die die Referenzhöhenstände (h0i) repräsentieren, und
    - die Ermittelung der Masse (m) des Fahrzeugs (1) aus den Werten, die die Referenzhöhenstände (h0i) repräsentieren, den gemessenen Höhenständen (hi) und den Kennlinien (Di) der Radaufhängungen (2) quasi parallel durchgeführt werden.

9.  Verfahren nach Anspruch 8
    **dadurch gekennzeichnet, dass**
    sobald die Werte, die die Referenzhöhenstände (h0i) repräsentieren, ermittelt wurden, diese zum Ermitteln der Masse (m) des Fahrzeugs (1) eingesetzt werden.

10. Verfahren nach Anspruch 8
    **dadurch gekennzeichnet, dass**
    die Werte, die die Referenzhöhenstände (h0i) repräsentieren, erst ermittelt werden, wenn der Schätzwert (mx) für die Masse des Fahrzeugs in einem vorgegebenen Wertebereich liegt.

11. Verfahren nach Anspruch 8
    **dadurch gekennzeichnet, dass**
    die Werte, die die Referenzhöhenstände (h0i) repräsentieren, nur zum Ermitteln der Masse (m) des Fahrzeugs (1) eingesetzt werden, nachdem sich diese Werte um einen vorgegebenen Wert geändert haben.

12. Verfahren nach einem der vorigen Ansprüche
    **dadurch gekennzeichnet, dass**
    für die Ermittelung der Werte, die die Referenzhöhenstände (h0i) repräsentieren, mindestens ein Kalman-Filter eingesetzt wird, in welchem bereits ermittelte Werte zusammen mit den gerade ermittelten Werten zum Ermitteln von neuen Werten gekoppelt werden.

13. Verfahren nach einem der vorigen Ansprüche
    **dadurch gekennzeichnet, dass**
    die Kennlinien (Di) der Radaufhängungen (2) abhängig von Differenzen von Höhenständen (hi) und Differenzen von Massen (m) des Fahrzeugs (1) ermittelt werden.

14. Verfahren nach einem der Ansprüche 1 bis 14, bei dem Bremssysteme oder Reifenluftdrücke abhängig von der ermittelten Masse (m) des Fahrzeugs (1) eingestellt werden.

15. Vorrichtung zum Betreiben eines Fahrzeugs (1) mit

    - Radaufhängungen (2), und diesen jeweils zugeordneten Kennlinien (Di), wobei die Kennlinie (Di) jeweils einen Zusammenhang zwischen der an der jeweiligen Radaufhängung (2) anteilig angreifenden Gewichtskraft (Fi) des Fahrzeugs (1) und dem jeweiligen Höhenstand (hi) des Fahrzeugs (1) an der Radaufhängungsstelle (2) herstellt, und
    - mindestens zwei Höhenstandsensoren (3), zum Erfassen der Höhenstände (hi) an den Radaufhängungen (2), wobei den Höhenstandsensoren (3) jeweils ein Referenzhöhenstand (h0i) zugeordnet ist, der repräsentativ für einen vorgegebenen Beladungszustand des Fahrzeugs (1) ist,
    wobei die Vorrichtung ausgebildet ist
    - zum Erfassen der Höhenstände (hi),
    - zum Ermitteln der am Fahrzeug (1) angreifenden Kräfte (Fx), wobei mindestens die Antriebskraft (Fa), die Bremskraft (Fb), der Luftwiderstand (F1) oder der Rollwiderstand (Fr) des Fahrzeugs (1) berücksichtigt werden,
    - zum Ermitteln der Beschleunigung (ax) des Fahrzeugs (1) aufgrund der am Fahrzeug (1), angreifenden Kräfte (Fx),
    - zum Ermitteln eines Schätzwertes (mx) für die Masse (m) des Fahrzeugs (1) aus den am Fahrzeug (1) angreifenden Kräften (Fx) und der Beschleunigung (ax) des Fahrzeugs (1), und
- zum Ermitteln von Werten, die die Referenzhöhenstände (h0i) repräsentieren, aus mindestens dem Schätzwert (mx) für die Masse (m) des Fahrzeugs (1), den Kennlinien (Di) der Radaufhängungen und den erfassten Höhenständen (hi).

**Claims**

1. Method for operating a vehicle (1) which has:

   - wheel suspension units (2), and characteristic curves (Di) which are respectively assigned thereto, wherein the characteristic curve (Di) produces in each case a relationship between the weight force (Fi), acting proportionally on the respective wheel suspension unit (2), of the vehicle (1) and the respective vertical position (hi) of the vehicle (1) at the wheel suspension point (2), and
   - at least two vertical position sensors (3) for detecting the vertical positions (hi) on the wheel suspension units (2), wherein a reference vertical position (h0i) is assigned to each of the vertical position sensors (3), said reference vertical position (h0i) being representative of a predefined load state of the vehicle (1), having the steps:
   - detection of the vertical positions (hi),
   - determination of the forces (Fx) acting on the vehicle (1), wherein at least the drive force (Fa), the braking force (Fb), the air resistance (Fl) or the rolling resistance (Fr) of the vehicle (1) is taken into account,
   - determination of the acceleration (ax) of the vehicle (1) on the basis of the forces (Fx) acting on the vehicle (1),
   - determination of an estimated value (mx) for the mass (m) of the vehicle (1) from the forces (Fx) acting on the vehicle (1) and the acceleration (ax) of the vehicle (1), and
   - determination of values which represent the reference vertical positions (h0i), from at least the estimated value (mx) for the mass (m) of the vehicle (1), the characteristic curves (Di) of the wheel suspension units and the detected vertical positions (hi).

2. Method according to Claim 1,
   **characterized in that**

   - further vertical positions (hi) are detected, and
   - the mass (m) of the vehicle (1) is determined as a function of at least the values which represent the reference vertical positions (h0i), the characteristic curves (Di) of the wheel suspension units (2) and the further vertical positions (hi).

3. Method according to Claim 1 or 2,
   **characterized in that**
   the values which represent the reference vertical positions (h0i) are averaged.

4. Method according to one of the preceding claims,
   **characterized in that**
   a longitudinal acceleration is detected as an acceleration (ax) of the vehicle (1) by means of a longitudinal acceleration sensor (4).

5. Method according to one of Claims 1 to 3,
   **characterized in that**

   - a wheel speed is detected by means of at least one wheel speed sensor (5), and
   - the acceleration (ax) of the vehicle (1) is determined from the derivative over time of the detected wheel speed.

6. Method according to one of the preceding claims,
   **characterized in that**
   the estimated value (mx) is determined for the mass in predefined driving situations.

7. Method according to one of the preceding claims,
   **characterized in that**
   an average estimated value of the mass is determined as a function of the estimated values (mx) of the mass.

8. Method according to one of the preceding claims, **characterized in that**

   - the determination of the estimated value (mx) for the mass of the vehicle (1) from the forces (Fx) acting on the vehicle (1) and the acceleration (ax) of the vehicle (1),
   - the determination of the values which represent the reference vertical positions (h0i), and
   - the determination of the mass (m) of the vehicle (1) from the values which represent the reference vertical positions (h0i) are carried out as it were in parallel with the measured vertical positions (hi) and the characteristic curves (Di) of the wheel suspension units (2).

9. Method according to Claim 8, **characterized in that** as soon as the values which represent the reference vertical positions (h0i) have been determined, they are used to determine the mass (m) of the vehicle (1).

10. Method according to Claim 8, **characterized in that** the values which represent the reference vertical positions (h0i) are not determined until the estimated value (mx) for the mass of the vehicle is in a predefined value range.

11. Method according to Claim 8, **characterized in that** the values which represent the reference vertical positions (h0i) are used to determine the mass (m) of the vehicle (1) only after these values have been changed by a predefined value.

12. Method according to one of the preceding claims, **characterized in that** at least one Kalman filter, in which values which have already been determined are coupled together with the values just determined, for the determination of new values, is used for the determination of the values which represent the reference vertical positions (h0i).

13. Method according to one of the preceding claims, **characterized in that** the characteristic curves (Di) of the wheel suspension units (2) are determined as a function of differences between vertical positions (hi) and differences between masses (m) of the vehicle (1).

14. Method according to one of Claims 1 to 14, in which brake systems or tyre pressures are set as a function of the determined mass (m) of the vehicle (1).

15. Device for operating a vehicle (1) having

   - wheel suspension units (2) and characteristic curves (Di) which are respectively assigned thereto, wherein the characteristic curve (Di) produces in each case a relationship between the weight force (Fi), acting proportionally on the respective wheel suspension unit (2), of the vehicle (1) and the respective vertical position (hi) of the vehicle (1) at the wheel suspension point (2), and
   - at least two vertical position sensors (3) for detecting the vertical positions (hi) on the wheel suspension units (2), wherein a reference vertical position (h0i) is assigned to each of the vertical position sensors (3), said reference vertical position (h0i) being representative of a predefined load state of the vehicle (1),
   wherein the device is designed
   - to detect the vertical positions (hi), and
   - to determine the forces (Fx) acting on the vehicle (1), wherein at least the drive force (Fa), the braking force (Fb), the air resistance (F1) or the rolling resistance (Fr) of the vehicle (1) is taken into account,
   - for the determination of the acceleration (ax) of the vehicle (1) on the basis of the forces (Fx) acting on the vehicle (1),
   - for the determination of an estimated value (mx) for the mass (m) of the vehicle (1) from the forces (Fx) acting on the vehicle (1) and the acceleration (ax) of the vehicle (1), and
   - for the determination of values which represent the reference vertical positions (h0i), from at least the estimated value (mx) for the mass (m) of the vehicle (1), the characteristic curves (Di) of the wheel suspension units and the detected vertical positions (hi).

**Revendications**

1. Procédé pour faire fonctionner un véhicule (1), qui présente:

  - des suspensions de roue (2) et des courbes caractéristiques (Di) affectées respectivement à ces premières, dans lequel la courbe caractéristique (Di) établit respectivement un rapport entre la force de pesanteur (Fi) du véhicule (1) s'exerçant proportionnellement sur 1 a suspension de roue respective (2) et la hauteur de caisse respective (hi) du véhicule (1) au niveau de la suspension de roue (2), et
  - au moins deux capteurs de hauteur de caisse (3) pour capter les hauteurs de caisse (hi) au niveau des suspensions de roue (2), dans lequel une hauteur de caisse de référence (h0i) est affectée respectivement aux capteurs de hauteur de caisse (3), laquelle est représentative d'un état de charge prédéfini du véhicule (1),

  comprenant les étapes consistant à :

  - capter les hauteurs de caisse (hi),
  - déterminer les forces (Fx) s'exerçant sur le véhicule (1), en prenant en considération au moins la force motrice (Fa), la force de freinage (Fb), la résistance à l'air (F1) ou la résistance au roulement (Fr) du véhicule (1),
  - déterminer l'accélération (ax) du véhicule (1) sur la base des forces (Fx) s'exerçant sur le véhicule (1),
  - déterminer une valeur estimée (mx) pour la masse (m) du véhicule (1) à partir des forces (Fx) s'exerçant s u r le véhicule (1) et de l'accélération (ax) du véhicule (1), et
  - déterminer des valeurs représentant les hauteurs de caisse de référence (h0i) à partir d'au moins la valeur estimée (mx) pour la masse (m) du véhicule (1), des courbes caractéristiques (Di) des suspensions de roue et des hauteur de caisse captées (hi).

2. Procédé selon la revendication 1,
  **caractérisé en ce que**

  - d'autres hauteurs de caisse (hi) sont captées, et **en ce que**
  - la masse (m) du véhicule (1) est déterminée en fonction d'au moins les valeurs représentant les hauteurs de caisse de référence (h0i), des courbes caractéristiques (Di) des suspensions de roue (2) et d'autres hauteurs de caisse (hi).

3. Procédé selon la revendication 1 ou 2,
  **caractérisé en ce que**
  la moyenne des valeurs représentant les hauteurs de caisse de référence (h0i) est établie.

4. Procédé selon l'une quelconque des revendications précédentes,
  **caractérisé en ce que**
  une accélération longitudinale est captée, par un capteur d'accélération longitudinale (4), comme accélération (ax) du véhicule (1),

5. Procédé selon l'une quelconque des revendications 1 à 3,
  **caractérisé en ce que**

  - une vitesse de rotation de roue est captée au moyen d'au moins un capteur de vitesse de rotation de roue (5), et **en ce que**
  - l'accélération (ax) du véhicule (1) est établie à partir de la dérivée temporelle de la vitesse de rotation de roue captée.

6. Procédé selon l'une quelconque des revendications précédentes,
  **caractérisé en ce que**
  la valeur estimée (mx) pour la masse est déterminée dans des situations de conduite prédéfinies.

7. Procédé selon l'une quelconque des revendications précédentes,
  **caractérisé en ce que**

une valeur estimée moyenne de la masse est déterminée en fonction des valeurs estimées (mx) de la masse.

8. Procédé selon l'une quelconque des revendications précédentes, **caractérisé en ce que**

   - la détermination de la valeur estimée(mx) pour la masse du véhicule (1) à partir des forces (Fx) s'exerçant s u r le véhicule (1) et de l'accélération (ax) du véhicule (1),
   - la détermination des valeurs représentant les hauteurs de caisse de référence (h0i), et
   - la détermination de la masse (m) du véhicule (1) à partir des valeurs représentant les hauteurs de caisse de référence (h0i), des hauteurs de caisse mesurées (hi) et des courbes caractéristiques (Di) des suspensions de roue (2), sont effectuées de manière quasiment parallèle.

9. Procédé selon la revendication 8, **caractérisé en ce que** les valeurs représentant les hauteurs de caisse de référence (h0i) sont utilisées, dès qu'elles ont été déterminées, pour la détermination de la masse (m) du véhicule (1).

10. Procédé selon la revendication 8, **caractérisé en ce que** les valeurs représentant les hauteurs de caisse de référence (h0i) sont déterminées seulement lorsque la valeur estimée (mx) pour la masse du véhicule se situe dans une plage de valeurs prédéfinie.

11. Procédé selon la revendication 8, **caractérisé en ce que** les valeurs représentant les hauteurs de caisse de référence (h0i) ne sont utilisées pour déterminer la masse (m) du véhicule (1), que lorsque ces valeurs ont changé d'une valeur prédéfinie.

12. Procédé selon l'une quelconque des revendications précédentes, **caractérisé en ce que** pour la détermination des valeurs représentant les hauteurs de caisse de référence (h0i), on utilise au moins un filtre de Kalman, par lequel des valeurs déjà déterminées sont couplées aux valeurs déterminées à l'instant pour déterminer de nouvelles valeurs.

13. Procédé selon l'une quelconque des revendications précédentes, **caractérisé en ce que** les courbes caractéristiques (Di) des suspensions de roue (2) sont déterminées en fonction de différences de hauteurs de caisse (hi) et de différences de masses (m) du véhicule (1).

14. Procédé selon l'une quelconque des revendications 1 à 14, dans lequel des systèmes de freinage ou des pressions d'air de pneu sont réglés en fonction de la masse déterminée (m) du véhicule (1).

15. Dispositif pour faire fonctionner un véhicule (1), comprenant :

   - des suspensions de roue (2) et des courbes caractéristiques (Di) affectées respectivement à ces premières, dans lequel la courbe caractéristique (Di) établit respectivement un rapport entre la force de pesanteur (Fi) du véhicule (1) s'exerçant proportionnellement sur la suspension de roue respective (2) et la hauteur de caisse respective (hi) du véhicule (1) au niveau de la suspension de roue (2), et
   - au moins deux capteurs de hauteur de caisse (3) pour capter les hauteurs de caisse (hi) au niveau des suspensions de roue (2), dans lequel une hauteur de caisse de référence (h0i) est affectée respectivement aux capteurs de hauteur de caisse (3), laquelle est représentative d'un état de charge prédéfini du véhicule (1),

   dans lequel le dispositif est constitué pour

   - capter les hauteurs de caisse (hi),
   - déterminer les forces (Fx) s'exerçant sur le véhicule (1) en prenant en considération au moins la force motrice (Fa), la force de freinage (Fb), la résistance à l'air (F1) ou la résistance au roulement (Fr) du véhicule (1),
   - déterminer l'accélération (ax) du véhicule (1) sur la base des forces (Fx) s'exerçant sur le véhicule (1),
   - déterminer une valeur estimée(mx) pour la masse (m) du véhicule (1) à partir des forces (Fx) s'exerçant s u r le véhicule (1) e t de l'accélération (ax) du véhicule (1), et

- déterminer des valeurs représentant les hauteurs de caisse de référence (h0i) à partir d'au moins la valeur estimée (mx) pour la masse (m) du véhicule (1), des courbes caractéristiques (Di) des suspensions de roue et des hauteurs de caisse captées (hi).

FIG 1

Fi, F0i

h0i

hi

3

2

6

5

1

FIG 2

1

Fl

Fr

4

mg

Fx

h1   h2

6                        6

Fb            Fa

F1, F3        F2, F4

z

x, v, ax

## FIG 3

## FIG 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6055471 A